Europäisches Patentamt

European Patent Office

Office européen des brevets

(11) Numéro de publication: **0 311 543**
**A1**

## (12) DEMANDE DE BREVET EUROPEEN

(21) Numéro de dépôt: 88440081.3

(51) Int. Cl.⁴: **B 60 P 3/07**

(22) Date de dépôt: 05.10.88

(30) Priorité: 05.10.87 FR 8713878
02.12.87 FR 8716944

(43) Date de publication de la demande:
12.04.89 Bulletin 89/15

(84) Etats contractants désignés:
AT BE CH DE ES GB IT LI LU NL

(71) Demandeur: **LOHR INDUSTRIE**
**29, rue du 14 Juillet**
**F-67980 Hangenbieten (FR)**

(72) Inventeur: **André, Jean-Luc**
**15, Route du Vin**
**F-67310 Dangolsheim (FR)**

(74) Mandataire: **Metz, Paul et al**
**Cabinet METZ PATNI 95, rue de la Ganzau**
**F-67100 Strasbourg (FR)**

(54) **Sangle d'arrimage pour le maintien par les roues d'un véhicule chargé sur un plan de transport.**

(57) Liaison souple pour l'arrimage d'un véhicule par ses roues.
Liaison caractérisée par une sangle qui passe au-dessus du pneu et se trouve en contact, direct ou indirect, de pression avec celui-ci par la fixation de chacune de ses extrémités au plan de chargement de part et d'autre des roues avant (2) ou arrière (3) et mise en tension à l'aide d'un dispositif de tension (12) et en ce que la liaison affecte une forme générale plate. Cette invention intéresse les constructeurs de véhicules porte-voitures.

FIG.2

EP 0 311 543 A1

# Description

## Liaison souple pour l'arrimage d'un véhicule par ses roues sur un plan de chargement et de transport.

La présente invention se rapporte à une liaison souple pour l'arrimage d'un véhicule par ses roues sur un plan de chargement et de transport.

Elle trouve principalement application dans le secteur des véhicules porte-voitures.

Longtemps pratiqué, l'arrimage des voitures par les anneaux de remorquage se trouve maintenant déconseillé par les constructeurs en raison des contraintes mécaniques imposées aux voitures. En effet, les mouvements, secousses et trépidations diverses risquent de fatiguer prématurément la suspension, notamment les amortisseurs.

Les précautions dans la suppression ou l'atténuation des risques de détérioration pendant le transport des voitures neuves représentent un intérêt grandissant avec le prix de la voiture.

Ainsi, l'abandon de l'arrimage par les anneaux des barres de remorquage a obligé les transporteurs et les constructeurs de véhicules porte-voitures à chercher d'autres solutions pour le maintien des voitures sur le plan de soutien.

Ne pouvant utiliser de points d'attache solidaires de la carrosserie ou du châssis, les réflexions se sont naturellement orientées vers les roues qui se trouvent déjà en contact avec le plan de soutien des voitures.

La difficulté technique à résoudre consiste à imaginer un moyen simple, pratique et peu encombrant qui permettra de maintenir efficacement les roues des véhicules quels que soient leur diamètre et la largeur du pneu.

La présente invention a pour but de fournir un tel moyen particulièrement bien adapté au maintien d'un véhicule par ses roues.

A cet effet, elle se rapporte à une liaison souple pour l'arrimage d'un véhicule par ses roues caractérisée en ce que la liaison affecte la forme d'une sangle passant au-dessus du pneu en contact direct de pression ou indirect par l'intermédiaire de patins, avec le caoutchouc de la bande de roulement. Les aspérités dont est ou sont pourvue(s) la ou les face(s) de la bande ou des patins viennent en contact avec le caoutchouc ou se loger dans les évidements des sculptures du pneu en vue d'y prendre appui pour bloquer la roue en mouvements de rotation et transversaux, ladite sangle étant fixée au plan porteur par chacune de ses extrémités dont l'une au moins travers un dispositif tendeur.

La présente invention apporte de nombreux avantages. On en donnera les principaux ci-après :
. simplicité de constitution et efficacité de maintien
. solution économique et pratique
. facilité de fabrication
. universalité d'usage : avec la meme pièce on peut arrimer pratiquement toutes les roues existantes,
. il suffit d'une longueur de zone de contact minimale pour obtenir un maintien efficace,
. une largeur minimale convient pour tous les types et les largeurs courantes de pneus,
. le caractère souple de la liaison permet une pose aisée sans détérioration même sous des ailes enveloppantes,
. tension efficace de la sangle,
. facilité et simplicité de pose grâce aux patins.

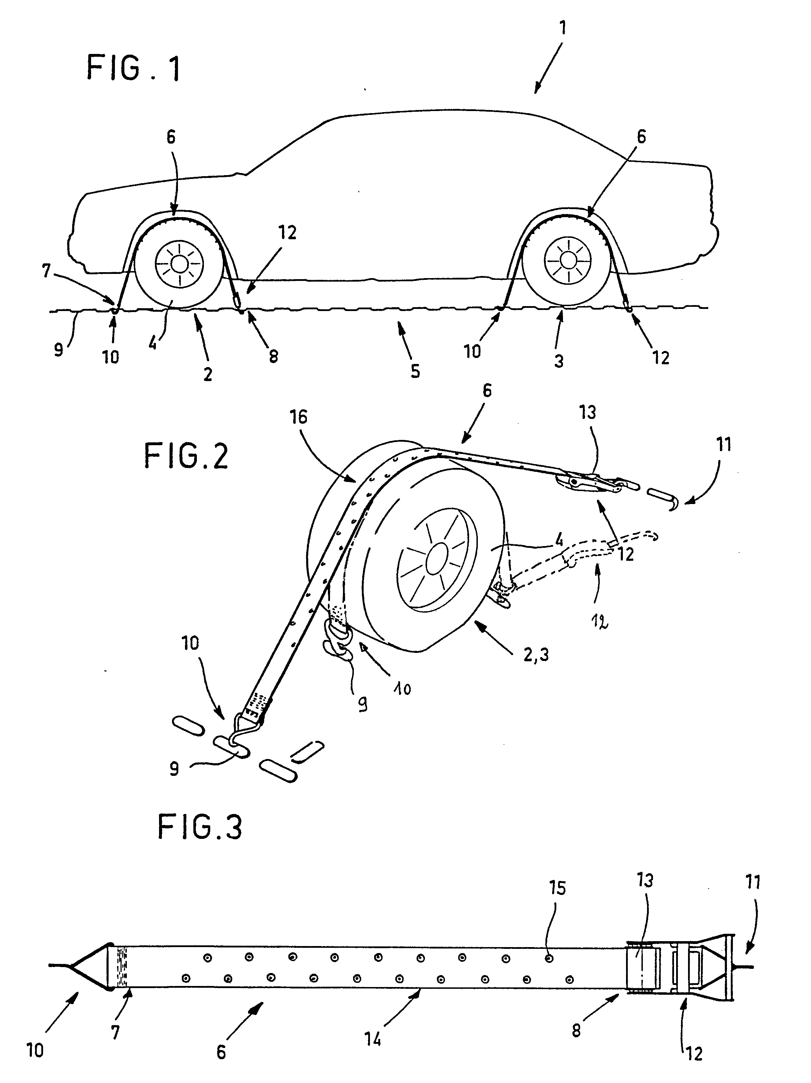

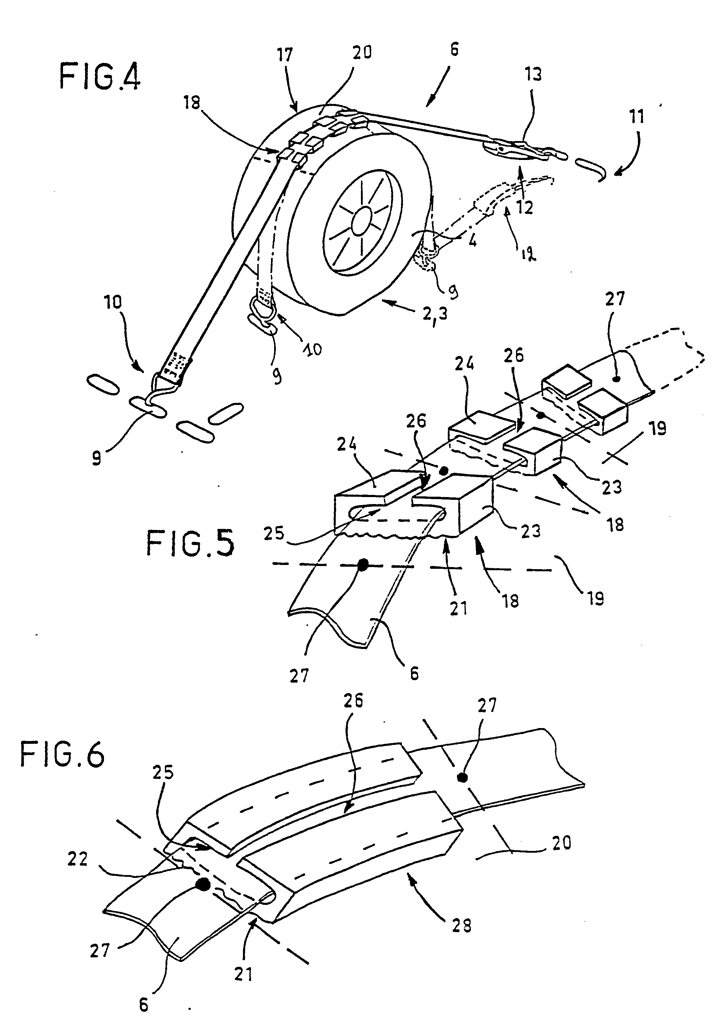

Les caractéristiques techniques et d'autres avantages de l'invention sont consignés dans la description qui suit effectuée à titre d'exemple non limitatif sur un mode d'exécution en référence aux dessins accompagnants dans lesquels :
. la figure 1 est une vue générale de profil d'une voiture maintenue sur un plan de chargement ;
. la figure 2 est une vue en perspective d'une roue maintenue par la liaison souple selon l'invention ;
. la figure 3 est une vue à plat de la pièce de liaison selon l'invention.
. la figure 4 est une vue en perspective d'une roue maintenue par la liaison souple équipée de structures coulissantes d'appui ;
. la figure 5 est une vue de détail en perspective montrant un premier mode de réalisation des structures coulissantes ;
. la figure 6 est une vue de détail en perspective montrant un deuxième mode de réalisation des structures coulissantes.

La liaison souple selon l'invention est appelée à immobiliser un véhicule 1 par exemple une voiture automobile par ses roues avant et arrière telles que 2 et 3 équipées de pneus 4 sur un plan de chargement et de transport 5.

Selon l'invention, le maintien est assuré par une liaison souple plate 6, du type sangle, sous la forme d'une bande fixée par chacune de ses extrémités 7 et 8 au plan de chargement et de transport 5.

Selon les caractéristiques de structure du plan de chargement, les modes de fixation peuvent changer.

Dans le cas de tôles perforées 9, comme représenté sur les figures, on pourra utiliser un crochet tel que 10 venant s'immobiliser dans l'une ou l'autre perforation voisine du pneu.

L'autre extrémité comporte un moyen de fixation analogue, par exemple un deuxième crochet 11 prolongé par un dispositif de tension 12 par exemple un tendeur à cliquet 13.

La bande de maintien selon l'invention présente, sur une partie de sa longueur correspondant approximativement à la surface de contact avec le pneu, une zone de maintien 14 comportant des reliefs ou aspérités tels que 15, destinés à venir en contact de pression avec la bande de roulement du pneu ou à s'engager dans l'un ou l'autre évidement, tel que 16, que présentent les sculptures de chaque pneu.

Afin d'éviter toute dégradation ou déformation permanente de la bande de roulement, les extrémités des reliefs seront de préférence bombées ou légèrement bombées.

Les essais ont montré que le nombre, la disposition et la forme des reliefs ou aspérités 15 ne modifient pas le résultat de façon déterminante.

Pour des raisons de fabrication, on pourra préférer des reliefs formés dans la masse lors de la fabrication de la bande.

Ces aspérités pourront également être rapportées en sous-face de la bande par tout moyen de solidarisation ou traverser la bande avec immobilisation par sertissage.

A titre illustratif, des structures saillantes par pièces traversantes bloquées de part et d'autre de la surface de la bande peuvent également convenir.

Concernant la bande proprement dite, des sangles du commerce en matière synthétique, utilisées par les transporteurs routiers conviennent parfaitement.

Pour parfaire l'arrimage, on rapprochera le point d'accrochage avant de la sangle le plus près possible de la roue, comme représenté en traits pointillés mixtes sur les figures 2 et 4.

Concernant l'accrochage arrière, on le rapproche également du pneu, de manière à mieux circonscrire le pneu et on ramène l'organe de manoeuvre du dispositif tendeur 12 le plus possible vers le bas, par exemple à l'aide d'un renvoi crochet accroché au plan de chargement, comme le montrent les figures.

Ce renvoi améliore l'arrimage et maintient le dispositif de tension le plus plat possible et prés du plan de chargement.

Cette dernière caractéristique permet d'éviter audit organe de manoeuvre du dispositif tendeur 12, de venir taper dans le bas de caisse des véhicules transportés et ainsi immobilisés suite aux trépidations et secousses provenant du roulage.

L'utilisation de la liaison d'arrimage selon l'invention s'effectue de la façon suivante. Le véhicule, voiture ou autre, se trouve immobilisé aur le plan de chargement.

Le personnel affecté à ces opérations place le crochet d'extrémité dans l'évidement de la tôle perforée, le plus près possible de la roue à immobiliser. La sangle est alors appliquée et tirée sur le pneu et son autre extrémité accrochée dans une perforation adjacente opposée, également près du pneu.

La sangle est alors mise en tension par le tendeur. Au cours de cette tension, les reliefs ou aspérités entrent en contact de pression avec la bande de roulement pour certaines ou s'immobilisent dans le creux de la surface de roulage du pneu pour d'autres.

Après la mise en tension appropriée de la sangle, l'ensemble est en place pour le transport, assurant la stabilité longitudinale, latérale et verticale recherchée.

On décrira ci-après un perfectionnement qui permet d'améliorer la tension de la bande et donc le maintien.

En effet, à l'usage, la mise en tension de la sangle s'effectue avec quelques difficultés en raison précisément des aspérités ou reliefs qui bloquent le glissement en tension de la sangle dès leur premier contact de pression avec la surface de roulage du pneu.

La tension de la sangle n'apparaît suffisante que du côté tendeur.

La solution directe consisterait à prévoir un deuxième tendeur côté accrochage de la sangle.

Cette solution simple ne peut convenir en raison du surcoût ainsi occasionné et de la gêne supplémentaire apportée par le deuxième tendeur lors du rangement et de la pose.

Cette amélioration se rapporte à des structures coulissantes antidérapantes à monter sur la sangle d'arrimage sous la forme de patins présentant en sous-face des reliefs destinés assurer l'immobilisation nécessaire sur la bande de roulement du pneu.

Les roues avant et arrière 2 et 3 équipées de pneus 4 sont immobilisées par la bande 6 fixée par chacune de ses extrémités au plan de chargement, par exemple formé des tôles à perforations 9.

Comme indiqué pour ce type de plan de chargement, on utilise un crochet tel que 10 venant s'immobiliser dans l'une ou l'autre perforation 9 voisine du pneu.

L'autre extrémité comporte un moyen de fixation analogue, par exemple un deuxième crochet 11 venant se fixer de la même façon dans une perforation 9.

La mise en tension est assurée par le tendeur 13 à cliquet du dispositif de tension 12.

Conformément à l'amélioration dont il s'agit, la bande de maintien est équipée dans sa zone centrale 17 couvrant le pneu, d'une ou de plusieurs structures coulissantes et antidérapantes appelées à réaliser d'une part le contact d'appui et de blocage avec le pneu et d'autre part à permettre le coulissement de la bande par rapport au pneu lors de la mise en tension.

Plusieurs formes techniques de réalisation s'avèrent possibles. On en décrira ci-après les deux principales.

Il s'agit de patins tels que 18 enveloppant la sangle sur une zone élémentaire 19 (figure 5) ou sur toute la zone 20 de contact (figure 6).

De façon avantageuse, le corps des patins affecte une forme de section en C et comprend d'une part en sous-face une surface antidérapante 21 présentant des aspérités 22, et d'autre part deux ailes 23 et 24 délimitant entre elles et avec la semelle 21 un passage 25 pour la sangle.

Les ailes 23 et 24 ne sont pas jointives. Elles laissent entre elles une ouverture longitudinale 26 pour l'introduction de la sangle.

Le passage 25 est de section légèrement inférieure à celle de la sangle de manière à rendre le coulissement moins facile, c'est-à-dire avec frottement, afin d'éviter à avoir à ajuster systématiquement les patins à leur emplacement approprié dans le cas d'utilisations fréquentes sur des véhicules identiques ou quasi identiques.

Par ailleurs, toujours au même but, on prévoit des butées 27 sous la forme de plots rapportés, boutons ou rivets limitant le débattement et la course des patins 18.

Le nombre des patins peut varier. Il semble que trois patins disposés à intervalle moyen constituent une solution optimale.

Une autre variante consiste à prévoir un seul patin 28 de plus grandes dimensions couvrant toute la zone de contact 20 avec le pneu.

En raison de l'adaptation à la forme incurvée du pneu, ce patin 28 de plus grandes dimensions sera réalisé dans une matière souple permettant d'épouser la forme du pneu sur la zone de contact.

Bien entendu, toutes les dimensions intermédiaires s'avèrent possibles et la caractéristique de rapprochement du pneu du point d'accrochage de l'extrémité de la sangle s'applique aussi bien dans cette réalisation ainsi que le renvoi à crochet décrit précédemment pour l'autre extrémité de la sangle.

Concernant les reliefs, de nombreuses formes peuvent convenir dès lors qu'elles permettent d'assurer un appui suffisamment solide nécessaire à la stabilité latérale et longitudinale. On indique ici, à titre d'exemple un quadrillage de formes pyramidales saillantes ou des clous tels que ceux existant sur les pneus dits "cloutés" utilisés en hiver.

## Revendications

1. Liaison souple pour l'arrimage d'un véhicule par ses roues sur un plan de chargement (5) en vue de son transport, caractérisée en ce que la liaison passe au-dessus du pneu et se trouve en contact, direct ou indirect, de pression avec celui-ci par la fixation de chacune de ses extrémités au plan de chargement de part et d'autre des roues avant (2) ou arrière (3) et mise en tension à l'aide d'un dispositif de tension (12) et en ce que le liaison affecte une forme générale plate.

2. Liaison selon la revendication 1 caractérisée en ce que la liaison présente sur sa zone de contact des reliefs ou des aspérités (15) destinés à venir se loger puis s'immobiliser dans les évidements (16) des sculptures du pneu en vue d'assurer une stabilité longitudinale et latérale.

3. Liaison selon les revendications 1 et 2 caractérisée en ce qu'elle est constituée par une sangle d'arrimage de transport routier.

4. Liaison selon la revendication 1 caractérisée en ce qu'elle porte un ou plusieurs patin(s) antidérapant(s) coulissant(s) le long de la sangle au travers desquels elle se trouve en contact indirect avec le pneu.

5. Liaison selon la revendication 4 caractérisée en ce que chaque patin est limité dans ses déplacements le long de la sangle par deux butées (27).

6. Liaison selon la revendication 5 caractérisée en ce que les butées sont des plots, boutons, rivets ou analogues (28) fixés sur ou à travers la bande formant sangle d'arrimage.

7. Liaison selon les revendications 4 à 6 caractérisée en ce que le corps du ou des patin(s) affecte une forme de section en C à semelle (21) prolongée latéralement par deux ailes adjacentes (23) et (24) délimitant entre elles et avec la semelle (21) un passage (25) pour la sangle.

8. Liaison selon la revendication 7 caractérisée en ce que les ailes (23) et (24) non jointives laissent entre elles une ouverture longitudinale (26) pour l'introduction de la sangle.

9. Liaison selon les revendications 7 et 8 caractérisée en ce que la sous-face de la semelle est conformée en structures saillantes antidérapantes.

10. Liaison selon les revendications précédentes caractérisée en ce que le coulissement s'effectue avec frottement.

11. Liaison selon les revendications précédentes caractérisée en ce que le patin est unique, confectionné en matière souple.

12 Liaison selon les revendications précédentes caractérisée en ce que les extrémités de la sangle sont fixées ou accrochées sur le plan de chargement le plus près possible du pneu.

13. Liaison selon la revendication 12 caractérisée en ce que la branche de la sangle comportant le dispositif de tension est dirigée vers le bas par un renvoi à chochet accroché sur le plan de chargement destiné en plus à maintenir le dispositif de tension le plus plat possible et le plus près du plan de chargement.

FIG . 1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | WO-A-7 900 130 (VON DANWITZ) <br> * Revendications 1,2,3 * <br> --- | 1,3 | B 60 P 3/07 |
| X | US-A-1 860 565 (BERGER) <br> * Page 1, ligne 91 - page 2, ligne 23; figure 1 * <br> --- | 1,3,4 | |
| X | US-A-2 046 855 (TOBIN) <br> * Figure 9 * <br> --- | 1,4,5 | |
| X | FR-A-2 443 609 (SPANSET) <br> * Figure 3 * <br> ----- | 1,3 | |

DOMAINES TECHNIQUES RECHERCHES (Int. Cl.4)

B 60 P

Le présent rapport a été établi pour toutes les revendications

| Lieu de la recherche | Date d'achèvement de la recherche | Examinateur |
|---|---|---|
| LA HAYE | 09-01-1989 | SCHMITTER J.M. |